# FASCICULE DE BREVET EUROPEEN

(11) **EP 2 871 930 B1**
(45) Date de publication et mention de la délivrance du brevet: **29.03.2017**
(21) Numéro de dépôt: 13756555.2
(22) Date de dépôt: 09.07.2013
(51) Int. Cl.: A01F 29/00

(54) **MACHINE DE DISTRIBUTION**
VERTEILMASCHINE
DISTRIBUTING MACHINE

(30) Priorité: 12.07.2012 FR 1256743
(43) Date de publication de la demande: 20.05.2015
(73) Titulaire: Kuhn-Audureau S.A., 85260 La Copechagnière (FR)
(72) Inventeur: ROGER, Christophe, F-44000 Nantes (FR); GARNIER, Charly, F-85660 Saint Philibert De Bouaine (FR)
(74) Mandataire: Esch, Esther Evelyne
(86) Numéro de dépôt international: PCT/FR2013/051638
(87) Numéro de publication internationale: WO 2014/009651

(56) Documents cités:
- EP-A1- 2 436 261
- FR-A1- 2 598 059
- FR-A1- 2 741 777

## Description

La présente invention concerne une machine de distribution de produits pour l'alimentation ou la formation de litière pour les animaux, comportant une benne avec une ouverture pour le passage des produits vers un carter comportant une première paroi voisine de l'ouverture et une deuxième paroi distante de la première paroi, dans lequel carter est montée une turbine pouvant tourner autour d'un axe de rotation, la turbine comportant un disque avec des pales et des couteaux.

Sur une telle machine, les produits tels que de la paille ou du foin, sont introduits dans la benne et déplacés en direction de l'ouverture au moyen par exemple d'un tapis mobile situé dans le fond de la benne. Après avoir éventuellement rencontré un tambour démêleur permettant une alimentation homogène de la turbine et un flux régulier vers celle-ci, les produits passent à travers l'ouverture. Ils entrent ensuite dans le carter dans lequel la turbine tourne à grande vitesse. Sous l'effet de cette rotation, les produits sont déplacés vers une périphérie de la turbine en glissant le long des pales. Les couteaux de la turbine assurent le hachage des produits. Par l'effet de soufflerie dû notamment aux pales, les produits hachés sont ensuite éjectés à travers une goulotte et dirigés vers le sol ou vers des auges par exemple.

Il est connu du document FR 2 598 059 A1 une machine avec une turbine comportant un moyeu tournant autour de l'axe de rotation, laquelle turbine comporte des pales solidaires du disque. Ces pales sont de simples tôles planes qui s'étendent suivant une direction radiale du disque. Ces pales comportent des extrémités voisines du moyeu et qui ne le rejoignent pas. De telles pales souffrent d'un manque de rigidité pendant le travail de la machine. Des couteaux sont disposés en rangées dans le prolongement des pales. Ces rangées sont de faible largeur et comportent un nombre réduit de couteaux de petites dimensions. Lorsque la machine est alimentée avec des produits denses et/ou humides et/ou à brins longs, les efforts exercés par de tels produits sur les pales de la turbine en rotation peuvent être très importants. Il peut en être de même sur les couteaux. La conception des rangées de couteaux ne permet pas de hacher un volume important de tels produits difficiles de manière rapide et homogène dans tout le carter de la turbine. Les déformations subies par le disque et les pales fragilisent la turbine et peuvent générer des collisions avec des composants qui coopèrent avec la turbine. Un risque de collision existe par exemple avec des contre-couteaux coopérant avec les couteaux de la turbine. Cette disposition affecte la machine connue. En sus, le fonctionnement de cette dernière est pénalisé par des produits qui sont retenus par les extrémités des pales voisines du moyeu, ce qui augmente le risque de bourrage.

Une autre machine connue du document EP 2 436 261 A1 est conforme au préambule de la revendication 1. Sur cette machine, la turbine comporte un cylindre central creux autour duquel se répartissent des tôles planes de faible épaisseur liées audit cylindre. Ce cylindre creux et ces tôles planes s'étendent en projection perpendiculaire depuis le disque. Cette conception présente de nombreux creux et arêtes vives qui gênent l'écoulement des produits depuis le centre de la turbine en rotation vers sa périphérie. De plus, des produits peuvent aisément rester coincés dans ces aspérités géométriques. C'est notamment le cas au sein du cylindre creux, ou encore dans le creux en forme de V qui sépare deux tôles planes. Des accumulations de produits peuvent former un balourd qui déséquilibre la turbine en rotation. Chaque tôle plane est prolongée par une branche parallèle au disque et qui porte des couteaux. Chaque pale est formée par l'assemblage d'une tôle plane et d'une branche correspondante. Une telle pale présente une faible section et peut facilement se déformer sous l'effet de produits denses hachés par la turbine en rotation. La turbine dans son ensemble présente une rigidité insuffisante qui la fragilise et augmente le risque de déformation permanente après un certain temps d'utilisation.

Le document EP 2 436 261 décrit une machine conforme au préambule de la revendication 1.

La présente invention a pour but une machine qui ne présente pas les inconvénients précités.

A cet effet, une importante caractéristique de l'invention réside dans le fait, que ladite au moins une branche de la plaque est reliée au disque par deux tôles latérales de fermeture pour former un caisson, et qu'au moins une pale de la turbine est formée par ledit caisson. De cette manière, cette pale présente une rigidité nettement accrue. Elle se déforme très peu lorsque la turbine travaille. En sus, la pale peut porter une rangée de couteaux de grande largeur, avec un
grand nombre de couteaux de grandes dimensions et de masse élevée. Le hachage d'un volume important de produits difficiles dans le carter de la turbine est ainsi rendu plus rapide et plus homogène. Les produits arrivant au niveau de la partie centrale de la turbine, sont déplacés avec fluidité au moins vers ladite pale, le long de laquelle ils peuvent facilement glisser. Le risque de voir des produits s'accumuler sur cette pale est réduit.

Selon une caractéristique avantageuse de l'invention, la plaque comporte une pluralité de branches, chaque branche s'étend depuis la partie centrale suivant une direction sensiblement radiale du disque, chaque branche de la plaque est reliée au disque par deux tôles latérales de fermeture pour former un caisson, et chaque pale de la turbine est formée par ledit caisson. De cette manière, la turbine dans son ensemble présente une rigidité nettement accrue. Le disque et les pales se déforment très peu lorsque la turbine travaille. En sus, les pales peuvent porter des rangées de couteaux de grande largeur, avec un grand nombre de couteaux de grandes dimensions et de masse élevée. La machine selon l'invention permet ainsi de hacher un volume important de produits difficiles de manière rapide et homogène dans tout le carter de la turbine. Les produits, arrivant au niveau de la partie centrale de la plaque de la turbine en rotation, sont déplacés avec fluidité sur cette plaque en direction des pales le long desquelles ils peuvent aisément glisser. Le risque de voir des produits s'accumuler sur la turbine est réduit, celle-ci conserve donc un bon équilibrage dynamique en rotation.

D'autres caractéristiques et avantages de l'invention ressortiront de la description ci-après avec référence aux dessins annexés qui représentent un exemple non limitatif de réalisation de la machine selon l'invention.

Sur ces dessins :
- la figure 1 représente une vue de côté avec une coupe partielle d'une machine selon l'invention ;
- la figure 2 représente une vue de face du tambour démêleur ;
- la figure 3 représente une vue de détail d'un agencement, dans une première position, de la machine selon l'invention ;
- la figure 4 représente une vue de détail de l'agencement, dans une deuxième position, de la machine selon l'invention ;
- la figure 5 représente une vue en perspective du carter et de la turbine ;
- la figure 6 représente une vue en perspective de la turbine sans les couteaux ;
- la figure 7 représente une vue du carter et de la turbine, en coupe dans un plan passant par l'axe de rotation.

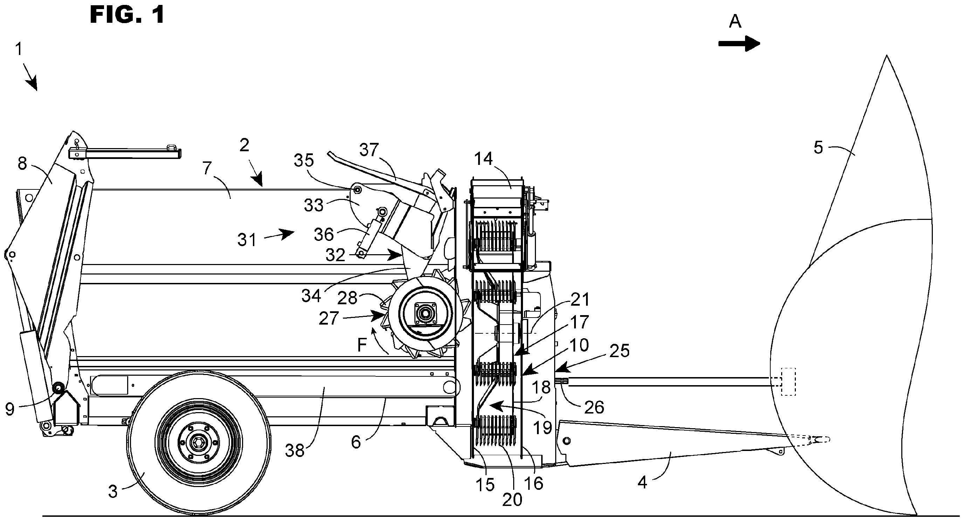

Telle qu'elle est représentée sur la figure 1, la machine (1) selon l'invention comporte une benne (2) avec deux roues porteuses (3) et un timon (4) pour l'accrochage à un tracteur (5) servant à animer la machine (1) et à la déplacer. La flèche (A) indique le sens de déplacement normal de la machine (1). Les indications "avant" et "arrière" sont données en fonction de ce sens de déplacement. La benne (2) est avantageusement déplaçable en hauteur par rapport aux roues porteuses (3). Cela permet de l'abaisser jusqu'au sol lors de son chargement et de la soulever pour les déplacements.

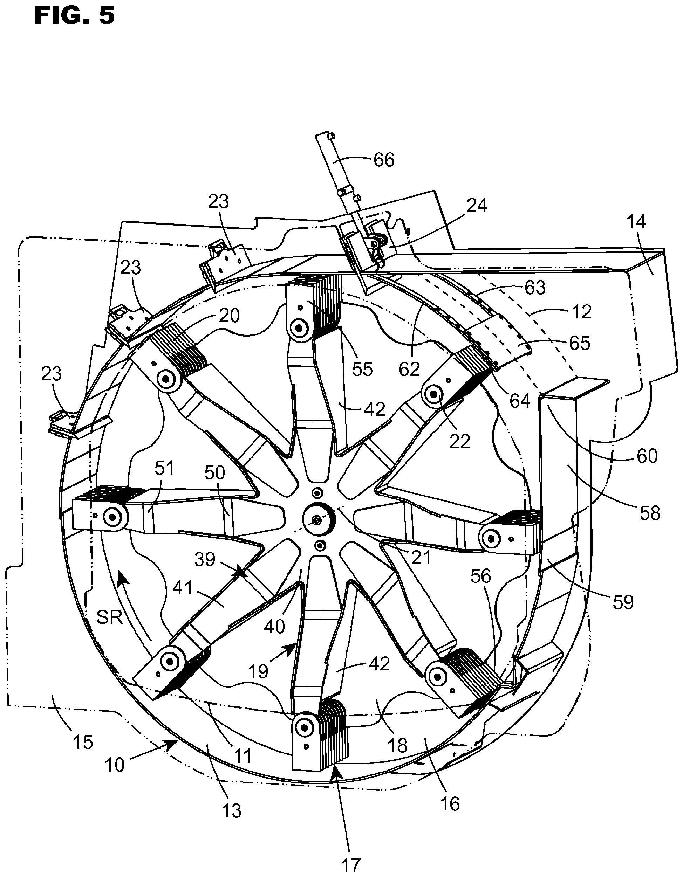

La benne (2) possède un fond (6) et deux parois latérales (7). Le côté arrière permet le chargement des produits dans la benne (2). Il peut être fermé au moyen d'un panneau (8) qui est articulé sur la benne (2) au moyen d'un axe (9), de manière à permettre de déplacer le panneau (8). Tel que cela ressort des figures 1 et 5, le côté avant de la benne (2) est constitué par un carter (10) possédant une ouverture (11) orientée vers l'intérieur de la benne (2) pour le passage des produits de la benne (2) vers le carter (10). Le carter (10) comporte également un orifice de sortie (12) sur son pourtour (13). Cet orifice de sortie (12) communique avec une goulotte d'éjection (14) orientable pour diriger le flux des produits. Le carter (10) est délimité notamment par une première paroi (15), adossée à la benne (2) et percée de ladite ouverture (11), et par une deuxième paroi (16), entre lesquelles est disposée une turbine (17).

Comme représenté sur la figure 5, la turbine (17) comporte un disque (18) avec des pales (19) et des couteaux (20), lequel disque (18) est fixé sur un arbre qui permet de l'entraîner en rotation autour d'un axe de rotation (21) de préférence sensiblement horizontal. Chaque pale (19) est orientée suivant une direction sensiblement radiale du disque (18). Une partie au moins des couteaux (20), notamment tous les couteaux (20), sont montés à pivotement sur au moins un axe de fixation (22), notamment sur des axes de fixation (22) respectifs. Ce ou ces axes de fixation (22) sont liés au disque (18). Une partie au moins des couteaux (20), notamment tous les couteaux (20), sont regroupés en au moins une rangée, notamment en plusieurs rangées. Au moins un axe de fixation (22), notamment chaque axe de fixation (22), est disposé en prolongement d'une pale (19) respective. Une partie au moins des couteaux (20), notamment tous les couteaux (20), sont disposés en prolongement d'au moins une pale (19), notamment en prolongement des pales (19). En cas de rencontre avec un corps dur étranger tel qu'une pierre, les couteaux (20) peuvent s'escamoter par pivotement autour de leur axe de fixation (22) sans être endommagés. Les différents couteaux (20) ont de préférence la forme d'un rectangle de grandes dimensions et sont sensiblement parallèles entre eux. Ils comportent une ou plusieurs arêtes tranchantes. Lors de la rotation de la turbine (17), les couteaux (20) coopèrent avec des contre-couteaux (23, 24) disposés sur le pourtour (13) du carter (10) et visibles sur la figure 5. Les contre-couteaux (23, 24) ont de préférence la forme de palettes orientées sensiblement perpendiculairement à un plan de rotation de la turbine (17) et s'étendant de la première paroi (15) jusqu'à la deuxième paroi (16) du carter (10). La machine (1) comporte par exemple trois contre-couteaux fixes (23) et un contre-couteau réglable (24) placé, vu dans le sens de rotation (SR) de la turbine (17), entre le dernier contre-couteau fixe (23) et l'orifice de sortie (12).

A l'avant du carter (10) est monté un boîtier de distribution (25) représenté sur la figure 1. Celui-ci comporte une entrée (26) qui peut être reliée à un arbre de prise de force du tracteur (5), à l'aide d'un arbre intermédiaire. L'arbre de la turbine (17) est relié à une première sortie dudit boîtier (25).

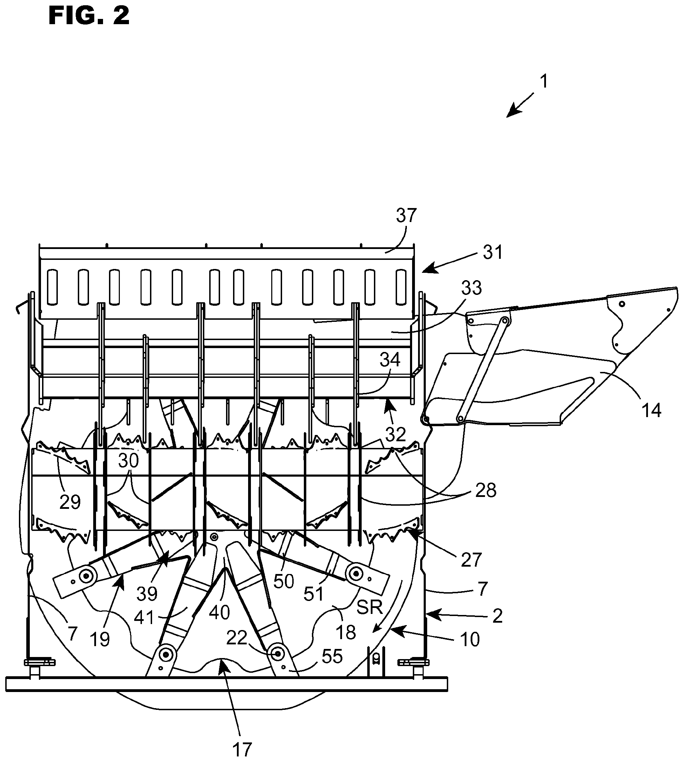

Devant l'ouverture (11) du carter (10) est disposé un tambour démêleur (27) muni de couteaux (28). Le tambour démêleur (27) se situe ainsi entre les produits chargés dans la benne (2) et la turbine (17). Le tambour démêleur (27) est monté entre les parois latérales (7) de la benne (2). A ses extrémités, il est guidé dans des paliers fixés auxdites parois latérales (7), de manière à pouvoir tourner autour d'un axe géométrique longitudinal. Le tambour démêleur (27) est entraîné en rotation, par exemple à l'aide de moyens de transmission qui le relient à une deuxième sortie du boîtier de distribution (25), ou bien à l'aide d'un moteur hydraulique. Ainsi que cela ressort de la figure 2, le tambour démêleur (27) comporte sur sa périphérie des segments de spires (29). Le sens d'enroulement de chacun de ces segments de spires (29) peut être inversé par rapport à celui du ou des segments (29) voisins. Il est également possible d'inverser le sens d'enroulement du ou des segments (29) situés sur une moitié de la longueur du tambour démêleur (27) par rapport à celui du ou des segments (29) situés sur l'autre moitié de la longueur du tambour démêleur (27). Les segments de spires (29) comportent des sections droites (30) qui sont dirigées dans le sens de rotation (F) du tambour démêleur (27). Des couteaux (28) sont avantageusement fixés sur ces sections droites (30).

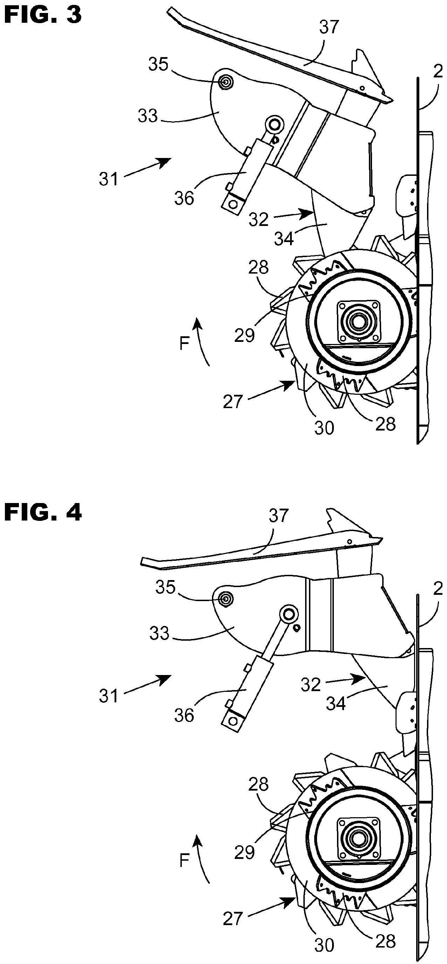

Au-dessus du tambour démêleur (27) se trouve un dispositif de régulation (31) comportant des organes de retenue (32) et une paroi déflectrice (33). Dans l'exemple représenté, ces organes de retenue (32) sont constitués par plusieurs plaques (34) sensiblement parallèles aux parois latérales (7). Ils sont fixés sur la paroi déflectrice (33) qui est déplaçable par rapport au tambour démêleur (27), dans au moins deux positions différentes. Dans une première position, qui est représentée sur la figure 3, la paroi déflectrice (33) est rapprochée du tambour démêleur (27). La section du passage entre la paroi déflectrice (33) et le tambour démêleur (27) est ainsi beaucoup plus grande à son extrémité arrière qu'à son extrémité avant. Dans une deuxième position, qui est représentée sur la figure 4, la paroi déflectrice (33) est éloignée du tambour démêleur (27). Le passage entre la paroi déflectrice (33) et le tambour démêleur (27) présente ainsi une grande section sensiblement constante entre son extrémité arrière et son extrémité avant.

La paroi déflectrice (33), qui porte les organes de retenue (32), est articulée, à son extrémité arrière, sur un axe (35) sensiblement horizontal solidaire des parois latérales (7) de la benne (2). La paroi déflectrice (33) est déplaçable autour dudit axe (35) au moyen d'un système de réglage (36). Ce système de réglage (36) peut être par exemple un vérin hydraulique, qui est lié d'une part à la paroi déflectrice (33) elle-même et, d'autre part, à une paroi latérale (7) de la benne (2). Ce vérin est relié au moyen de conduits au dispositif hydraulique du tracteur (5) et peut être commandé, de sorte qu'il s'ouvre ou se ferme, depuis ce dernier. Il permet ainsi de déplacer ladite paroi déflectrice (33) dans les positions décrites précédemment.

Un écran (37) est articulé sur la paroi déflectrice (33) et prolonge ladite paroi (33) en direction des produits contenus dans la benne (2). L'écran (37) se déplace lorsque la paroi déflectrice (33) est déplacée dans ses différentes positions de travail.

Dans la première position de la paroi déflectrice (33), chaque organe de retenue (32) se situe au-dessus de la moitié arrière du tambour démêleur (27) et s'étend jusque dans la trajectoire des couteaux (28). L'écran (37) est rapproché des produits contenus dans la benne (2).

Dans la deuxième position de la paroi déflectrice (33), chaque organe de retenue (32) se situe au-dessus de la moitié avant du tambour démêleur (27) et s'étend à une certaine distance au-dessus de la trajectoire des couteaux (28). L'écran (37) est davantage éloigné des produits contenus dans la benne (2).

Sur le fond (6) de la benne (2) est disposé un tapis de déplacement (38) des produits. Ce tapis (38) est constitué par une bande transporteuse qui est animée de sorte qu'elle amène les produits contenus dans la benne (2) au tambour démêleur (27).

Les produits entraînés par le tambour démêleur (27) franchissent l'ouverture (11) du carter (10) et arrivent sensiblement au centre de la turbine (17) en rotation. Ils glissent alors le long des pales (19) et sur le disque (18), en direction du pourtour (13) du carter (10) où ils sont freinés et faiblement hachés par les trois contre-couteaux fixes (23) coopérant avec les couteaux (20) de la turbine (17). De cette manière, les produits présents le long du pourtour (13) sont ralentis à proximité des contre-couteaux fixes (23). Au cours de leur trajet le long du pourtour (13) du carter (10), les produits sont accélérés par l'effet des pales (19) et des couteaux (20) de la turbine (17). Au niveau du contre-couteau réglable (24), les produits sont d'autant plus fortement freinés que le contre-couteau réglable (24) est plus proche de la trajectoire des couteaux (20) autour de l'axe de rotation (21). L'intensité du hachage peut ainsi être ajustée en faisant varier la distance entre les couteaux (20) et ledit contre-couteau réglable (24). Les produits ainsi hachés sont ensuite éjectés à travers l'orifice de sortie (12) vers la goulotte (14), par l'effet de soufflerie dû notamment aux pales (19).

Selon l'invention, la turbine (17) comporte une plaque (39) orientée vers l'ouverture (11). Cette plaque (39) est distante du disque (18). La plaque (39) comporte une partie centrale (40). Cette partie centrale (40) est distante du disque (18). La plaque (39) comporte également au moins une branche (41). Ladite au moins une branche (41) s'étend depuis la partie centrale (40) suivant une direction sensiblement radiale du disque (18). Ladite au moins une branche (41) de la plaque (39) est reliée au disque (18) par deux tôles latérales de fermeture (42) pour former un caisson. Au moins une pale (19) de la turbine (17) est formée par ledit caisson. De cette manière, la pale (19) en question présente une grande rigidité lui permettant d'encaisser avec une déformation minime, des efforts importants générés par le hachage de produits denses et/ou humides, ainsi que ceux induits par l'inertie des couteaux (20) qui, dans l'invention, sont de préférence en grand nombre et présentent de grandes dimensions. Les produits arrivant au niveau de la partie centrale (40) de la turbine (17), sont déplacés avec fluidité au moins vers ladite pale (19), le long de laquelle ils peuvent facilement glisser.

Selon une caractéristique avantageuse de l'invention, la plaque (39) de la turbine (17) comporte une pluralité de branches (41). Chaque branche (41) s'étend depuis la partie centrale (40) suivant une direction sensiblement radiale du disque (18). Chaque branche (41) de la plaque (39) est reliée au disque (18) par deux tôles latérales de fermeture (42) pour former un caisson. Chaque pale (19) de la turbine (17) est formée par ledit caisson. De cette manière, la turbine (17) dans son ensemble présente une grande rigidité. Les produits arrivant au niveau de la partie centrale (40) de la turbine (17), sont déplacés avec fluidité vers les différentes pales (19) le long desquelles ils peuvent aisément glisser.

Les couteaux (20) de la turbine (17) sont disposés dans le prolongement des pales (19). Ainsi, les produits sont déplacés avec fluidité depuis la partie centrale (40), le long des pales (19), en direction des couteaux (20) où ils sont hachés.

En vue d'obtenir une bonne rigidité de la pale (19) en caisson, les tôles latérales de fermeture (42) sont de préférence liées au disque (18) et à la plaque (39) par soudure, par exemple par soudure au cordon.

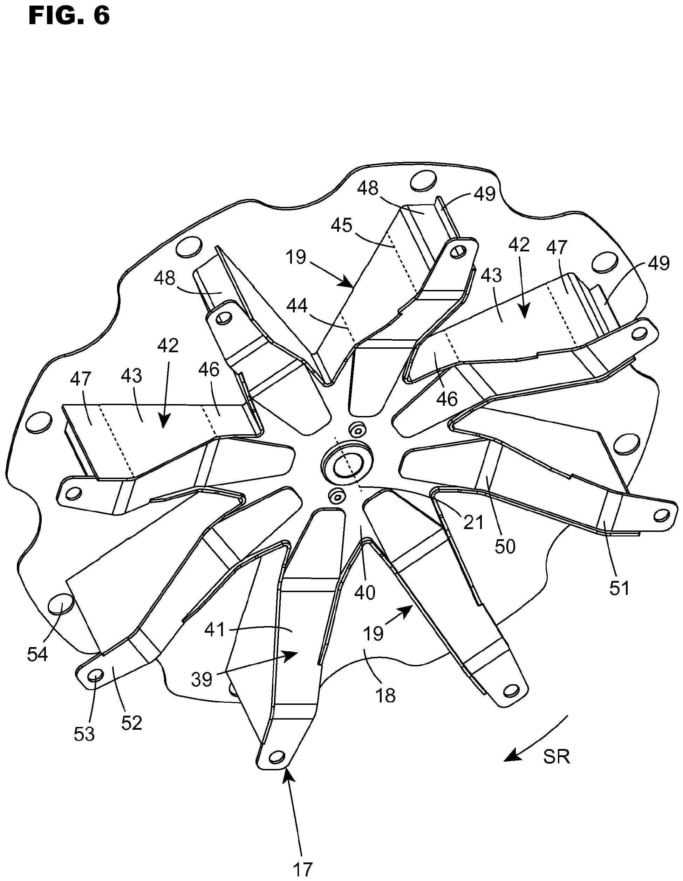

Ainsi qu'il ressort notamment de la figure 6, chaque tôle latérale de fermeture (42) comporte avantageusement une portion (43) qui s'étend d'une part entre le disque (18) et la branche (41) correspondante, d'autre part entre une petite largeur (44) voisine de l'axe de rotation (21) et une grande largeur (45) voisine des couteaux (20). La grande largeur (45) est supérieure à la petite largeur (44). Ainsi, la distance entre la première paroi (15) du carter (10) et la partie centrale (40) de la turbine (17) est sensiblement plus importante qu'entre cette même paroi (15) et la plaque (39) considérée au niveau de ladite grande largeur (45). De cette manière, une quantité importante de produits peut pénétrer dans le carter (10) et arriver au centre de la turbine (17), d'où elle se répartit ensuite le long de la pale (19) correspondante en rotation, notamment le long de chaque pale (19) respective en rotation. Cette caractéristique permet à la machine (1) de hacher un débit important de produits. En sus, la grande largeur (45) plus grande que la petite largeur (44) donne une pale (19) de section relativement importante qui permet de souffler et d'éjecter les produits à travers la goulotte (14) à une grande distance de la machine (1).

Dans l'exemple de réalisation illustré notamment par la figure 6, chaque portion (43) est de forme sensiblement trapézoïdale avec un grand côté égal à la grande largeur (45) et un petit côté égal à la petite largeur (44).

Tel que cela est représenté sur la figure 6 par exemple, chaque tôle latérale de fermeture (42) comporte de préférence une portion intérieure (46) située dans le prolongement de la portion (43). La portion intérieure (46) est reliée à la portion (43) par la petite largeur (44) et s'étend jusqu'à la partie centrale (40) de la plaque (39). Dans l'exemple de la figure, la partie centrale (40) s'étend depuis l'axe de rotation (21) jusqu'à l'endroit où deux branches (41) adjacentes de la plaque (39) se rejoignent. Ainsi, les portions intérieures (46) respectives de deux tôles latérales de fermetures (42) adjacentes, forment un V au fond duquel lesdites portions intérieures (46) sont liées l'une à l'autre, par exemple au moyen d'un cordon de soudure. A la différence de l'exemple de réalisation de la figure 6, il serait aussi envisageable qu'une portion surfacique, notamment circulaire, sépare deux tôles latérales de fermeture (42) se faisant plaque. En pareil cas, lesdites portions intérieures (46) seraient liées l'une à l'autre par l'intermédiaire de ladite portion surfacique.

Dans l'exemple de la figure 6, chaque portion intérieure (46) est sensiblement rectangulaire.

Il ressort encore de la figure 6 que chaque tôle latérale de fermeture (42) comporte de préférence une portion extérieure (47) située dans le prolongement de la portion (43) et reliée à la portion (43) par la grande largeur (45).

Dans l'exemple de la figure 6, chaque portion extérieure (47) est sensiblement rectangulaire.

Chaque tôle latérale de fermeture (42) comporte une extrémité distante de l'axe de rotation (21). Les extrémités des tôles latérales de fermeture (42) d'une pale (19) sont avantageusement liées entre elles par une plaque de fermeture (48). Le caisson formant cette pale (19), notamment le caisson formant chaque pale (19), est ainsi fermé, ce qui augmente encore la rigidité de cette pale (19) et de la turbine (17). La plaque de fermeture (48) peut être liée à l'une des tôles latérales de fermeture (42) par pliage d'une même tôle de départ, tandis que l'autre tôle latérale de fermeture (42) de la pale (19) peut être liée à la plaque de fermeture (42) par soudure.

Lorsque la turbine (17) tourne, les pales (19) déplacent les produits au sein du carter (10). Une tôle latérale de fermeture (42) d'une pale (19) frappe alors lesdits produits, laquelle tôle (42) comporte avantageusement un rebord (49) dépassant la plaque de fermeture (48). Ce rebord (49), visible sur la figure 6, remplit deux fonctions. Une première fonction consiste en ce que la surface de la tôle latérale de fermeture (42) qui comporte ledit rebord (49), est augmentée. Ceci génère un effet de soufflerie plus important et augmente la distance sur laquelle les produits sont éjectés hors de la machine (1). Par ailleurs, lorsque les couteaux (20) rencontrent un paquet de produits plus denses, ils pivotent légèrement autour de leurs axes de fixation (22) respectifs, en sens contraire du sens de rotation (SR) de la turbine (17). Lorsque ce paquet est évacué, les couteaux (20), de par leur inertie, pivotent cette fois dans le sens de rotation (SR) de la turbine (17) et peuvent aller bien au-delà d'une orientation radiale au disque (18). S'ensuivent des contraintes importantes sur les axes de fixation (22). Une deuxième fonction dudit rebord (49) consiste donc à limiter l'amplitude de ces pivotements indésirables, ledit rebord (49) formant une butée pour les couteaux (20).

De préférence, chaque tôle latérale de fermeture (42) présente un aspect totalement lisse. Ainsi, les produits sont déplacés avec fluidité le long de ladite tôle (42) sans être retenus par une aspérité quelconque.

Selon une caractéristique avantageuse de l'invention, au moins une branche (41) comporte, vue depuis l'ouverture (11), une partie concave (50) voisine de la partie centrale (40) et une partie convexe (51) voisine des couteaux (20). Cette branche (41) suit la forme des tôles latérales de fermeture (42) conçue pour qu'un volume important de produits puisse franchir l'ouverture (11) du carter (10) et être déplacé avec fluidité vers les couteaux (20). Cette branche (41) participe ainsi à cette fluidité, lesdits produits pouvant aisément glisser le long de cette branche (41).

Selon une autre caractéristique avantageuse de l'invention, chaque branche (41) comporte, vue depuis l'ouverture (11), une partie concave (50) voisine de la partie centrale (40) et une partie convexe (51) voisine des couteaux (20). De cette manière, la plaque (39) a, vue depuis l'ouverture (11), une forme sensiblement concave. Ces branches (41) suivent la forme des tôles latérales de fermeture (42) conçue pour qu'un volume important de produits puisse franchir l'ouverture (11) du carter (10) et être déplacé avec fluidité vers les couteaux (20). Chaque branche (41) participe ainsi à cette fluidité, lesdits produits pouvant aisément glisser le long des branches (41).

Il ressort de la figure 6 que, par exemple, la partie concave (50) comporte un pli intérieur placé en regard de la petite largeur (44) de la portion (43) et que la partie convexe (51) comporte un pli extérieur placé en regard de la grande largeur (45) de la portion (43). Ainsi, la partie concave (50) résulte du pliage de la branche (41) pour former ledit pli intérieur, tandis que la partie convexe (51) voisine résulte du pliage de cette même branche (41) pour former ledit pli extérieur. Il apparaît encore sur la figure 6 que lesdits plis sont séparés par une portion de branche (41) placée en regard de la portion (43) sensiblement trapézoïdale.

De préférence, la grande largeur (45) est sensiblement égale à au moins deux fois la petite largeur (44), ce qui donne une pale (19) de forte section. Ainsi, cette pale (19) peut déplacer une grande quantité de produits jusqu'à la rangée de couteaux (20) correspondante et peut générer un effet de soufflerie important.

Au moins une branche (41) comporte avantageusement un sommet (52) distant de la partie centrale (40). Le sommet (52) comporte un trou (53) traversé par l'axe de fixation (22) autour duquel au moins un couteau (20) est monté à pivotement.

Suivant une disposition préférentielle, au regard du sommet (52) de branche (41), le disque (18) comporte un autre trou (54) sensiblement coaxial avec le trou (53) et également traversé par l'axe de fixation (22).

L'axe de fixation (22) est donc solidement porté à ses deux extrémités. Il peut porter, sans risque de rupture, des couteaux (20) de grandes dimensions et en grand nombre, par exemple de neuf à douze couteaux. Un tel nombre autorise un hachage rapide et régulier des produits. Des couteaux (20) de grandes dimensions ont, par leur inertie élevée, un effet de fléau particulièrement avantageux qui s'oppose efficacement aux efforts résistants générés par des produits denses et/ou humides. Les grandes dimensions des couteaux (20) ressortent notamment de la figure 5. Sur cette figure, on distingue que les couteaux (20) ont une largeur proche de celle des branches (41) de la plaque (39).

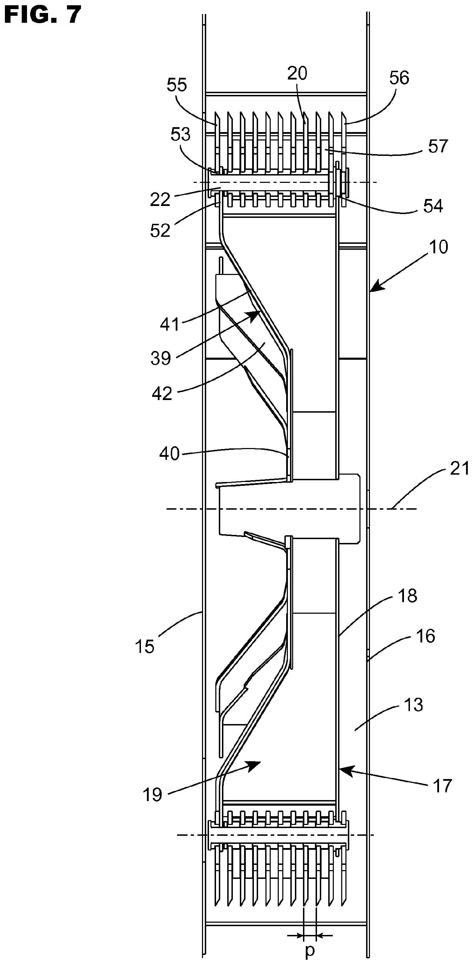

Ainsi qu'il ressort notamment de la figure 7, au moins un axe de fixation (22), notamment chaque axe de fixation (22), porte une rangée de couteaux (20) montés à pivotement avec un premier couteau (55) et un dernier couteau (56). De préférence, une distance séparant le premier couteau (55) du dernier couteau (56) est au moins égale à la grande largeur (45) de la tôle latérale de fermeture (42). De cette manière, la totalité des produits glissant le long de la pale (19) correspondante, notamment de chaque pale (19) respective, rencontre un couteau (20, 55, 56). En sus, la largeur de la rangée de couteaux (20, 55, 56), notamment de chaque rangée de couteaux (20, 55, 56), est importante. Combinées à la forme de pale (19) originale qui améliore le déplacement des produits, cette ou ces rangées de grande largeur permettent de hacher un volume important de produits denses et/ou humides et/ou à brins longs avec rapidité et homogénéité.

Selon une caractéristique avantageuse visible sur la figure 7, le premier couteau (55) est disposé entre le sommet (52) de branche (41) correspondant et la première paroi (15) du carter (10). De cette manière, les produits glissant le long de la branche (41) jusqu'au sommet (52) correspondant, sont également hachés. Cette disposition du premier couteau (55) assure également une recoupe des produits présents dans l'espace du carter (10) situé entre ledit sommet (52) et la première paroi (15). Ainsi, le risque de voir des produits s'accumuler dans ledit espace, et celui d'un bourrage, est réduit. Les produits éjectés en dehors du carter (10) sont plus homogènes. La machine (1) consomme moins de puissance. On notera encore que la conception originale de la turbine (17) avec une plaque (39) concave comportant une partie centrale (40) distante du disque (18) et au moins une branche (41), assure une alimentation régulière en produits dudit premier couteau (55).

En sus, le dernier couteau (56) peut être disposé entre le disque (18) et la deuxième paroi (16) du carter (10). Cette disposition du dernier couteau (56) assure une recoupe des produits présents dans l'espace du carter (10) situé entre le disque (18) et la deuxième paroi (16). Ainsi, le risque de voir des produits s'accumuler dans cet espace, et celui d'un bourrage, est réduit. Les produits éjectés en dehors du carter (10) sont plus homogènes. La machine (1) consomme moins de puissance.

De préférence, deux couteaux (20, 55, 56) successifs de la rangée de couteaux sont distants d'un pas (p) sensiblement constant, de façon à assurer un hachage régulier des produits sur la largeur de la rangée de couteaux (20, 55, 56).

Le premier couteau (55) est avantageusement placé à une distance de la première paroi (15) sensiblement égale au pas (p). Le dernier couteau (56) peut également être placé à une distance de la deuxième paroi (16) au moins égale au pas (p). Ainsi, le hachage des produits a lieu sur une grande largeur presqu'égale à celle du carter (10). Les produits présents entre un sommet (52) de branche (41) et la première paroi (15) du carter (10), sont entièrement recoupés. Il en est de même des produits présents entre le disque (18) et la deuxième paroi (16). Le risque d'accumulation ou de bourrage de produits dans ces espaces est donc considérablement réduit.

Tel que cela est représenté sur la figure 7, le dernier couteau (56) est de préférence placé à une distance de la deuxième paroi (16) du carter (10) comprise entre une et deux fois le pas (p) entre les autres couteaux (20, 55).

De préférence, les couteaux (20) placés entre le sommet (52) et le disque (18) sont séparés par des entretoises (57) montées à pivotement sur l'axe de fixation (22) et visibles sur la figure 7. Ces entretoises (57) réduisent la section libre entre les couteaux (20) correspondants, et augmentent donc la vitesse du flux d'air généré par la turbine (17) en rotation. Les produits sont éjectés de la machine (1) sur une distance plus grande.

De préférence, une longueur de chaque entretoise (57) mesurée suivant une direction sensiblement radiale du disque (18), est sensiblement égale à la moitié d'une longueur des couteaux (20) mesurée suivant la même direction.

L'orifice de sortie (12) du carter (10) représenté sur la figure 5 est délimité par la première paroi (15), la deuxième paroi (16) et une tôle de recyclage (58) des produits. Cette tôle de recyclage (58) comporte une extrémité inférieure (59) et une extrémité supérieure (60). L'extrémité inférieure (59) est proche d'une trajectoire des couteaux (20, 55, 56) autour de l'axe de rotation (21). L'extrémité supérieure (60) est éloignée de ladite trajectoire. Au cours d'une révolution de la turbine (17), une partie des produits, plus légère et/ou suffisamment hachée, est éjectée à travers l'orifice de sortie (12). L'autre partie, plus dense et/ou insuffisamment hachée, retombe entre les couteaux (20, 55, 56) et la tôle de recyclage (58) au lieu d'être éjectée. La disposition des extrémités inférieure et supérieure (59, 60) par rapport à la trajectoire des couteaux (20, 55, 56), donne un effet d'entonnoir qui force les produits à être repris par les couteaux (20, 55, 56) jusqu'à être suffisamment légers et/ou hachés en brins assez courts pour être éjectés. De fait, cette tôle de recyclage (58) réduit le risque d'accumulation des produits les plus denses au niveau de l'orifice de sortie (12), et contribue à un hachage homogène de tous les produits introduits dans le carter (10).

De préférence, l'extrémité supérieure (60) de la tôle de recyclage (58) est raccordée à la goulotte d'éjection (14) des produits. Ainsi, les produits qui franchissent l'orifice de sortie (12) pénètrent dans la goulotte d'éjection (14) pour être distribués par exemple sous forme de litière ou de fourrage.

Selon une caractéristique avantageuse de l'invention qui ressort de la figure 5, une première tôle de guidage (62) est adossée à la première paroi (15) du carter (10). La première tôle de guidage (62) est disposée entre la turbine (17) et l'orifice de sortie (12) du carter (10). La fonction de cette tôle de guidage (62) est d'empêcher les produits venant de la benne (2) et franchissant l'ouverture (11) du carter (10), d'être éjectés sans avoir été au préalable repris par la turbine (17) pour être hachés. Dans ce but, cette première tôle de guidage (62) a une dimension, mesurée suivant l'axe de rotation (21), sensiblement égale au pas (p) entre les couteaux (20, 55, 56). Elle ne limite pas le débit des produits.

De manière similaire, une deuxième tôle de guidage (63) est avantageusement adossée à la deuxième paroi (16) du carter (10). La deuxième tôle de guidage (63) est disposée entre la turbine (17) et l'orifice de sortie (12) du carter (10), et a une dimension, mesurée suivant l'axe de rotation (21), au moins égale au pas (p) entre les couteaux (20, 55, 56). De cette manière, la distance séparant les deux tôles de guidage (62, 63) est sensiblement égale à la distance séparant le premier couteau (55) du dernier couteau (56). Les deux tôles de guidage (62, 63) ne limitent pas le débit des produits hachés venant à être éjectés.

De préférence, la première tôle de guidage (62) et/ou la deuxième tôle de guidage (63) ont un rayon de courbure légèrement supérieur au rayon de la trajectoire des couteaux (20, 55, 56) autour de l'axe de rotation (21). Ainsi, les deux tôles de guidage (62, 63) suivent la trajectoire des couteaux (20, 55, 56) à faible distance de ces derniers, empêchant des produits de passer entre lesdites tôles (62, 63) et les couteaux (20, 55, 56).

La première tôle de guidage (62) et la deuxième tôle de guidage (63) présentent chacune une portion inférieure (64). Les portions inférieures (64) respectives peuvent être reliées par une tôle horizontale (65), visible sur la figure 5, qui permet de ralentir les brins longs afin qu'ils tombent entre la turbine (17) et la tôle de recyclage (58). De cette manière, ils sont hachés jusqu'à être suffisamment courts.

Chaque rangée de couteaux (20, 55, 56) coopère avec les contre-couteaux (23, 24), et notamment avec le contre-couteau réglable (24) représenté sur la figure 5. Le réglage de celui-ci est opéré au moyen d'un dispositif de réglage (66). Ce dernier peut être manuel, ou comprendre un vérin hydraulique relié à une centrale de commande à distance de la machine (1). Ledit vérin est relié au moyen de conduits au dispositif hydraulique du tracteur (5). La centrale de commande peut être déportée dans la cabine du tracteur (5) à partir de laquelle la position du contre-couteau réglable (24) peut être ajustée. En fonction des produits, l'utilisateur peut aisément faire varier la distance entre le contre-couteau réglable (24) et les couteaux (20, 55, 56) de la turbine (17), et ainsi déterminer l'intensité du hachage.

Au travail, la benne (2) peut être chargée de fourrage ou de paille en vrac ou sous forme de balles ou de blocs. Pour la distribution directe, la machine (1) est amenée sur le lieu de distribution au moyen du tracteur (5). Ensuite, la turbine (17) et le tambour démêleur (27) sont entraînés en rotation. Le tambour (27) tourne du bas vers le haut sur sa moitié arrière, c'est-à-dire dans le sens indiqué par la flèche (F). Lorsque la benne (2) est chargée avec une balle ou bien lorsque les produits sont denses et/ou humides, la paroi déflectrice (33) et les organes de retenue (32) sont rapprochés du tambour démêleur (27) dans la première position. Les couteaux (28) et les segments de spires (29) du tambour démêleur (27) détachent une certaine quantité de produits de la masse contenue dans la benne (2) et la font passer dans le carter (10). Les produits prélevés par le tambour démêleur (27) passent dans le passage entre ce dernier et la paroi déflectrice (33). Les organes de retenue (32) retiennent les produits dans la benne (2) et empêchent les gros paquets de produits d'accéder jusqu'à l'ouverture (11) du carter (10). Ces paquets glissent vers le haut le long des parties arrière de ces organes (32) et le long de l'écran (37) et retombent dans la benne (2). L'écartement entre les organes de retenue (32) est suffisant pour ne pas gêner le passage des produits correctement démêlés. Pendant la rotation du tambour démêleur (27), ses segments de spires (29) brassent et entraînent les produits en vue d'éviter la formation d'une voûte. Les produits arrivent ainsi de manière régulière à la turbine (17). En présence de paille ou de produits secs et légers, la paroi déflectrice (33) et les organes de retenue (32) sont éloignés du tambour démêleur (27) dans la deuxième position au moyen du système de réglage (36). Les produits ne sont alors plus arrêtés par les organes de retenue (32). Ils s'engouffrent dans le passage qui est plus ouvert entre le tambour démêleur (27) et la paroi déflectrice (33). Cette dernière dirige ces produits vers la moitié avant du tambour démêleur (27) où ils sont coupés par les couteaux (28), afin de pouvoir passer entre les extrémités avant des organes de retenue (32). Lesdits produits coupés parviennent alors jusqu'à la turbine (17). Celle-ci est en mesure de hacher avec homogénéité sur toute la largeur du carter (10), un volume important des différents produits cités précédemment, qui sont plus ou moins difficiles à travailler. La configuration du carter (10) avec la ou les tôles de guidage (62, 63), la tôle de recyclage (58) et la tôle horizontale (65), contribue à la qualité du hachage, notamment des produits denses et/ou à brins longs. Grâce à sa conception originale, la turbine (17) se déforme peu pendant le travail. La turbine (17) éjecte ensuite les produits recoupés à travers l'orifice de sortie (12). Les produits peuvent alors être dirigés à l'aide de la goulotte (14) vers les auges, lorsqu'il s'agit de fourrage ou vers les litières, lorsqu'il s'agit de paille. La goulotte (14) peut également être orientée de manière à former un tas de produits hachés en vue de leur incorporation ultérieure dans une machine telle qu'une mélangeuse. La machine (1) selon l'invention peut aussi être utilisée pour le paillage de lagunes ou la répartition de produits hachés au sol pour former une couverture. En dehors des première et deuxième positions de la paroi déflectrice (33), le système de réglage (36) peut également autoriser des positions intermédiaires en fonction de la nature des produits.

Pour mélanger, avant la distribution, différents produits chargés dans la benne (2), le tambour démêleur (27) et la turbine (17) sont entraînés en rotation comme cela a été décrit précédemment. La paroi déflectrice (33) est déplacée dans la deuxième position par pivotement autour de son axe (35) d'articulation au moyen du système de réglage (36). Les organes de retenue (32) pivotent avec ladite paroi (33) et se situent au-dessus de la moitié avant du tambour démêleur (27) et à une certaine distance au-dessus de la trajectoire des couteaux (28). Les paquets de produits ne sont alors plus arrêtés par les organes de retenue (32). Ils s'engouffrent dans le passage qui est plus ouvert entre le tambour démêleur (27) et la paroi déflectrice (33). Cette dernière dirige ces produits vers la moitié avant du tambour démêleur (27) où ils sont coupés par les couteaux (28), afin de pouvoir passer entre les organes de retenue (32). L'écran (37) empêche la projection des produits vers le haut et les guide vers le passage entre la paroi déflectrice (33) et le tambour démêleur (27). Lesdits produits coupés parviennent alors jusqu'à la turbine (17) qui les éjecte par la goulotte (14), laquelle est orientée vers l'arrière, afin qu'ils retombent dans la benne (2) et se mélangent. Ces produits peuvent ainsi subir deux ou trois passages par le tambour démêleur (27) et la turbine (17), de sorte à obtenir un mélange parfaitement homogène. Ensuite, l'orientation de la goulotte (14) peut être modifiée pour projeter les produits dans les auges.

En fonction de la position du contre-couteau réglable (24), la machine (1) peut hacher de la paille en brins courts de trois à cinq centimètres, broyer du produit difficile tel que de la paille humide ou du foin en brins longs de cinq à dix centimètres, ou encore éjecter les produits pratiquement sans les recouper.

Il est bien évident que l'invention n'est pas limitée à l'exemple de réalisation décrit ci-dessus et représenté sur les figures annexées. Des modifications restent possibles dans la limite fixée par les revendications.

## Revendications

1. Machine (1) de distribution de produits pour l'alimentation ou la formation de litière pour les animaux, comportant une benne (2) avec une ouverture (11) pour le passage des produits vers un carter (10) comportant une première paroi (15) voisine de l'ouverture (11) et une deuxième paroi (16) distante de la première paroi (15), dans lequel carter (10) est montée une turbine (17) pouvant tourner autour d'un axe de rotation (21), la turbine (17) comportant un disque (18) avec des pales (19) et des couteaux (20), la turbine (17) comporte une plaque (39) orientée vers l'ouverture (11) et distante du disque (18), et comportant une partie centrale (40) distante du disque (18) et au moins une branche (41), ladite au moins une branche (41) s'étend depuis la partie centrale (40) suivant une direction sensiblement radiale du disque (18), ***caractérisée en ce* que** ladite au moins une branche (41) de la plaque (39) est reliée au disque (18) par deux tôles latérales de fermeture (42) pour former un caisson, et qu'au moins une pale (19) de la turbine (17) est formée par ledit caisson.

2. Machine de distribution selon la revendication 1, ***caractérisée en ce que*** la plaque (39) comporte une pluralité de branches (41), que chaque branche (41) s'étend depuis la partie centrale (40) suivant une direction sensiblement radiale du disque (18), que chaque branche (41) de la plaque (39) est reliée au disque (18) par deux tôles latérales de fermeture (42) pour former un caisson, et que chaque pale (19) de la turbine (17) est formée par ledit caisson.

3. Machine de distribution selon la revendication 1 ou 2, ***caractérisée en ce que*** les couteaux (20) sont disposés en prolongement des pales (19).

4. Machine de distribution selon la revendication 1, ***caractérisée en ce que*** chaque tôle latérale de fermeture (42) comporte une portion (43), que la portion (43) s'étend d'une part entre le disque (18) et la branche (41) correspondante, d'autre part entre une petite largeur (44) voisine de l'axe de rotation (21) et une grande largeur (45) voisine des couteaux (20), et que la grande largeur (45) est supérieure à la petite largeur (44).

5. Machine de distribution selon la revendication 4, ***caractérisée en ce que*** chaque portion (43) est de forme sensiblement trapézoïdale.

6. Machine de distribution selon la revendication 4 ou 5, ***caractérisée en ce que*** chaque tôle latérale de fermeture (42) comporte une portion intérieure (46) située dans le prolongement de la portion (43), et que la portion intérieure (46) est reliée à la portion (43) par la petite largeur (44) et s'étend jusqu'à la partie centrale (40) de la plaque (39).

7. Machine de distribution selon la revendication 6, ***caractérisée en ce que*** chaque portion intérieure (46) est sensiblement rectangulaire.

8. Machine de distribution selon l'une quelconque des revendications 4 à 7, ***caractérisée en ce que*** chaque tôle latérale de fermeture (42) comporte une portion extérieure (47) située dans le prolongement de la portion (43) et reliée à la portion (43) par la grande largeur (45).

9. Machine de distribution selon la revendication 8, ***caractérisée en ce que*** chaque portion extérieure (47) est sensiblement rectangulaire.

10. Machine de distribution selon l'une quelconque des revendications 1 à 9, ***caractérisée en ce que*** chaque tôle latérale de fermeture (42) comporte une extrémité distante de l'axe de rotation (21), et que les extrémités des tôles latérales de fermeture (42) d'une pale (19) sont liées entre elles par une plaque de fermeture (48).

11. Machine de distribution selon la revendication 10, ***caractérisée en ce que*** la tôle latérale de fermeture (42) venant, par l'effet d'une rotation de la turbine (17), frapper les produits introduits dans le carter (10), comporte un rebord (49) dépassant la plaque de fermeture (48).

12. Machine de distribution selon la revendication 1, ***caractérisée en ce que*** ladite au moins une branche (41) comporte, vue depuis l'ouverture (11), une partie concave (50) voisine de la partie centrale (40) et une partie convexe (51) voisine des couteaux (20).

13. Machine de distribution selon la revendication 2, ***caractérisée en ce que*** chaque branche (41) comporte, vue depuis l'ouverture (11), une partie concave (50) voisine de la partie centrale (40) et une partie convexe (51) voisine des couteaux (20), de manière à ce que, vue depuis l'ouverture (11), la plaque (39) ait une forme sensiblement concave.

14. Machine de distribution selon la revendication 4 et l'une quelconque des revendications 12 ou 13, ***caractérisée en ce que*** la partie concave (50) comporte un pli intérieur placé en regard de la petite largeur (44) de la portion (43) et que la partie convexe (51) comporte un pli extérieur placé en regard de la grande largeur (45) de la portion (43).

15. Machine de distribution selon l'une quelconque des revendications 4 à 14, ***caractérisée en ce que*** la grande largeur (45) est sensiblement égale à au moins deux fois la petite largeur (44).

16. Machine de distribution selon la revendication 1, ***caractérisée en ce que*** ladite au moins une branche (41) comporte un sommet (52) distant de la partie centrale (40), et que le sommet (52) comporte un trou (53) traversé par un axe de fixation (22) autour duquel au moins un couteau (20) est monté à pivotement.

17. Machine de distribution selon les revendications 4 et 16, ***caractérisée en ce que*** l'axe de fixation (22) porte une rangée de couteaux (20) avec un premier couteau (55) et un dernier couteau (56), et qu'une distance séparant le premier couteau (55) du dernier couteau (56) est au moins égale à la grande largeur (45).

18. Machine de distribution selon la revendication 17, ***caractérisée en ce que*** le premier couteau (55) est disposé entre le sommet (52) de branche (41) correspondant et la première paroi (15) du carter (10).

19. Machine de distribution selon la revendication 17 ou 18, ***caractérisée en ce que*** le dernier couteau (56) est disposé entre le disque (18) et la deuxième paroi (16) du carter (10).

## Patentansprüche

1. Maschine (1) zur Verteilung von Produkten zur Fütterung oder Einstreubildung von Tieren, die ein Behälter (2) mit einer Öffnung (11) zum Durchfluss der Produkten zu einem Gehäuse (10) aufweist, das eine der Öffnung (11) benachbarte erste Wand (15) und eine von der ersten Wand (15) entfernte zweite Wand (16) umfasst, in welchem Gehäuse (10) eine Turbine (17) angebracht ist, die um eine Drehachse (21) drehen kann, wobei die Turbine (17) eine Scheibe (18) mit Blättern (19) und Messern (20) umfasst, die Turbine (17) weist eine zur Öffnung (11) gerichtete und von der Scheibe (18) entfernte Platte (39) auf, und ein von der Scheibe (18) entferntes Mittelteil (40) und mindestens ein Arm (41) umfasst, der mindestens eine Arm (41) erstreckt sich von dem Mittelteil (40) aus gemäss einer im Wesentlichen strahlenförmigen Richtung der Scheibe (18), ***dadurch gekennzeichnet* dass** der mindestens eine Arm (41) der Platte (39) mit der Scheiben (18) mittels zwei seitlichen Verschlussbleche (42) verbunden ist, um einen Kasten zu bilden und, dass mindestens ein Blatt (19) der Turbine (17) durch den Kasten gebildet wird.

2. Verteilmaschine nach Anspruch 1, ***dadurch gekennzeichnet* dass** die Platte (39) mehrere Arme (41) aufweist, dass sich jeder Arm (41) von dem Mittelteil (40) aus gemäss einer im Wesentlichen strahlenförmigen Richtung der Scheibe (18) erstreckt, das jeder Arm (41) der Platte (39) mittels zwei seitlichen Verschlussbleche (42) mit der Scheibe (18) verbunden ist, um einen Kasten zu bilden und, dass jedes Blatt (19) der Turbine (17) durch den Kasten gebildet wird.

3. Verteilmaschine nach Anspruch 1 oder 2, ***dadurch gekennzeichnet* dass** die Messer (20) in der Verlängerung der Blätter (19) angebracht sind.

4. Verteilmaschine nach Anspruch 1, ***dadurch gekennzeichnet* dass** jedes seitliche Verschlussblech (42) ein Teil (43) umfasst, dass sich das Teil (43) einerseits zwischen der Scheibe (18) und dem entsprechenden Arm (41) und andererseits zwischen einer der Drehachse (21) benachbarten kleine Breite (44) und einer der Messer (20) benachbarten grosse Breite (45) erstreckt, und dass die grosse Breite (45) grösser als die kleine Breite (44) ist.

5. Verteilmaschine nach Anspruch 4, ***dadurch gekennzeichnet* dass** jedes Teil (43) im Wesentlichen trapezförmig ist.

6. Verteilmaschine nach Anspruch 4 oder 5, ***dadurch gekennzeichnet* dass** jedes seitliche Verschlussblech (42) ein Innenteil (46) umfasst, das in der Verlängerung des Teils (43) liegt und, dass das Innenteil (46) mittels der kleinen Breite (44) mit dem Teil (43) verbunden ist und sich bis zum Mittelteil (40) der Platte (39) erstreckt.

7. Verteilmaschine nach Anspruch 6, ***dadurch gekennzeichnet* dass** jedes Innenteil (46) im Wesentlichen rechteckig ist.

8. Verteilmaschine nach irgend einem der Ansprüche 4 bis 7, ***dadurch gekennzeichnet* dass** jedes seitliche Verschlussblech (42) ein Aussenteil (47) umfasst, das in der Verlängerung des Teils (43) liegt und mittels der grossen Breite (45) mit dem Teil (43) verbunden ist.

9. Verteilmaschine nach Anspruch 8, ***dadurch gekennzeichnet* dass** jedes Aussenteil (47) im wesentlichen rechteckig ist.

10. Verteilmaschine nach irgend einem der Ansprüche 1 bis 9, ***dadurch gekennzeichnet* dass** jedes seitliche Verschlussblech (42) ein von der Drehachse (21) entferntes Ende aufweist und, dass die Ende der seitlichen Verschlussbleche (42) eines Blatts (19) mittels einer Verschlussplatte (48) miteinander verbunden sind.

11. Verteilmaschine nach Anspruch 10, ***dadurch gekennzeichnet* dass** das seitliche Verchlussblech (42), welches durch die Wirkung einer Drehung der Turbine (17) die in dem Gehäuse eingebrachten Produkten schlägt, einen Rand (49) umfasst, der die Verschlussplatte (48) überschreitet.

12. Verteilmaschine nach Anspruch 1, ***dadurch gekennzeichnet* dass** der mindestens eine Arm (41), von der Öffnung (11) aus gesehen, ein dem Mittelteil (40) benachbartes konkaves Teil (50) und ein den Messern (20) benachbartes konvexes Teil (51) aufweist.

13. Verteilmaschine nach Anspruch 2, ***dadurch gekennzeichnet* dass** jeder Arm (41), von der Öffnung (11) aus gesehen, ein dem Mittelteil (40) benachbartes konkaves Teil (50) und ein den Messern (20) benachbartes konvexes Teil (51) aufweist, sodass, von der Öffnung (11) aus gesehen, die Platte (39) eine im Wesentlichen konkave Form hat.

14. Verteilmaschine nach Anspruch 4 und irgend einem der Ansprüche 12 oder 13, ***dadurch gekennzeichnet* dass** das konkave Teil (50) eine innere Falte aufweist, die gegenüber der kleinen Breite (44) des Teils (43) liegt und, dass das konvexe Teil (51) eine äussere Falte aufweist, die gegenüber der grossen Breite des Teils (43) liegt.

15. Verteilmaschine nach irgend einem der Ansprüche 4 bis 14, ***dadurch gekennzeichnet* dass** die grosse Breite (45) im Wesentlischen gleich zweimal die kleine Breite (44) ist.

16. Verteilmaschine nach Anspruch 1, ***dadurch gekennzeichnet* dass** der mindestens eine Arm (41) einen von dem Mittelteil (40) entfernten Scheitel (52) umfasst und, dass der Scheitel (52) ein durch eine Befestigungsachse (22) durchquertes Loch (53) aufweist, um welche mindestens ein Messer (20) drehbar montiert ist.

17. Verteilmaschine nach den Ansprüchen 4 und 16, ***dadurch gekennzeichnet* dass** die Befestigungsachse (22) eine Reihe von Messern (20) mit einem ersten Messer (55) und einem letzten Messer (56) trägt, und dass ein das erste Messer (55) von dem letzten Messer (56) trennender Abstand mindestens der grossen Breite (45) gleich ist.

18. Verteilmaschine nach Anspruch 17, ***dadurch gekennzeichnet* dass** das erste Messer (55) zwischen dem Scheitel (52) des entsprechenden Arms (41) und der ersten Wand (15) des Gehäuses (10) angebracht ist.

19. Verteilmaschine nach Anspruch 17 oder 18, ***dadurch gekennzeichnet* dass** das letzte Messer (56) zwischen der Scheibe (18) und der zweiten Wand (16) des Gehäuses (10) angebracht ist.

## Claims

1. Machine (1) for the distribution of products for feeding or the bedding of animals, comprising a bucket (2) with an opening (11) for the passage of the products toward a casing (10) comprising a first wall (15) adjacent to the opening (11) and a second wall (16) remote from the first wall (15), in which casing (10) a turbine (17) is mounted that can rotate around a rotation axis (21), the turbine (17) comprising a disc (18) with blades (19) and knives (20), the turbine (17) comprises a plate (39) oriented towards the opening (11) and remote from the disc (18), and comprising a central part (40) remote from the disc (18) and at least one branch (41), the said at least one branch (41) extends from the central part (40) in a substantially radial direction of the disc (18), ***characterized in* that** the said at least one branch (41) of the plate (39) is connected to the disc (18) by two lateral closing sheets (42) to form a bin, and that at least one blade (19) of the turbine (17) is formed by the said bin.

2. Distribution machine according to claim 1, ***characterized in* that** the plate (39) comprises a plurality of branches (41), that each branch (41) extends from the central part (40) in a substantially radial direction of the disc (18), that each branch (41) of the plate (39) is connected to the disc (18) by two lateral closing sheets (42) to form a bin, and that each blade (19) of the turbine (17) is formed by the said bin.

3. Distribution machine according to claim 1 or 2, ***characterized in* that** the knives (20) are arranged in the extension of the blades (19).

4. Distribution machine according to claim 1, ***characterized in* that** each lateral closing sheet (42) comprises a portion (43), that the portion (43) extends on the one hand between the disc (18) and the corresponding branch (41), on the other hand between a small width (44) adjacent to the rotation axis (21) and a large width (45) adjacent to the knives (20), and that the large width (45) is larger than the small width (44).

5. Distribution machine according to claim 4, ***characterized in* that** each portion (43) has a substantially trapezoidal shape.

6. Distribution machine according to claim 4 or 5, ***characterized in* that** each lateral closing sheet (42) comprises an inner portion (46) situated in the extension of the portion (43), and that the inner portion (46) is connected to the portion (43) by the small width (44) and extends to the central part (40) of the plate (39).

7. Distribution machine according to claim 6, ***characterized in* that** each inner portion (46) is substantially rectangular.

8. Distribution machine according to any one of claims 4 to 7, ***characterized in* that** each lateral closing sheet (42) comprises an outer portion (47) situated in the extension of the portion (43) and connected to the portion (43) by the large width (45).

9. Distribution machine according to claim 8, ***characterized in* that** each outer portion (47) is substantially rectangular.

10. Distribution machine according to any one of claims 1 to 9, ***characterized in* that** each lateral closing sheet (42) comprises an end remote from the rotation axis (21), and that the ends of the lateral closing sheets (42) of a blade (19) are connected to each other by a closing plate (48).

11. Distribution machine according to claim 10, ***characterized in* that** the lateral closing sheet (42), which strikes the products inserted into the casing (10) due to the effect of a rotation of the turbine (17), comprises an edge (49) protruding the closing plate (48).

12. Distribution machine according to claim 1, ***characterized in* that** the said at least one branch (41) comprises, seen from the opening (11), a concave part (50) adjacent to the central part (40) and a convex part (51) adjacent to the knives (20).

13. Distribution machine according to claim 2, ***characterized in* that** each branch (41) comprises, seen from the opening (11), a concave part (50) adjacent to the central part (40) and a convex part (51) adjacent to the knives (20), such that, seen from the opening (11), the plate (39) has a substantially concave shape.

14. Distribution machine according to claim 4 and any one of claims 12 or 13, ***characterized in* that** the concave part (50) comprises an inner fold placed facing the small width (44) of the portion (43) and that the convex part (51) comprises an outer fold placed facing the large width (45) of the portion (43).

15. Distribution machine according to any one of claims 4 to 14, ***characterized in* that** the large width (45) is substantially equal to at least two times the small width (44).

16. Distribution machine according to claim 1, ***characterized in* that** the said at least one branch (41) comprises an apex (52) remote from the central part (40), and that the apex (52) comprises a hole (53) passed through by a fastening axis (22) around which at least one knife (20) is pivotably mounted.

17. Distribution machine according to claims 4 and 16, ***characterized in* that** the fastening axis (22) carries a row of knives (20) with a first knife (55) and a last knife (56), and that a distance separating the first knife (55) from the last knife (56) is at least equal to the large width (45).

18. Distribution machine according to claim 17, ***characterized in* that** the first knife (55) is arranged between the corresponding branch (41) apex (52) and the first wall (15) of the casing (10).

19. Distribution machine according to claim 17 or 18, ***characterized in* that** the last knife (56) is arranged between the disc (18) and the second wall (16) of the casing (10).
